# EUROPÄISCHE PATENTANMELDUNG

(11) **EP 1 916 436 A1**
(43) Veröffentlichungstag der Anmeldung: **30.04.2008**
(21) Anmeldenummer: 07021012.5
(22) Anmeldetag: 26.10.2007
(51) Int. Cl.: F16D 55/00

(54) **Bremssattel einer Scheibenbremse**

(30) Priorität: 26.10.2006 DE 102006050536
(71) Anmelder: KNORR-BREMSE SYSTEME FÜR NUTZFAHRZEUGE GMBH, 80809 München (DE)
(72) Erfinder: Macke, Wlodzimierz, 82140 Olching (DE)
(74) Vertreter: Mattusch, Gundula

(57) **Zusammenfassung**

Ein Bremssattel einer Scheibenbremse, insbesondere für Nutzfahrzeuge, mit zwei, im wesentlichen parallel und mit Abstand zueinander verlaufenden, eine Bremsscheibe quer zu deren Drehrichtung überbrückenden Zugstreben (3), die beidseitig der Bremsscheibe angeordnete Aufnahmen für Funktionsteile starr miteinander verbinden, ist so ausgebildet, dass die Zugstreben (3) hinsichtlich ihrer Gestaltung und Dimensionierung belastungsoptimiert und mit Durchbrechungen (4) versehen sind.

## Beschreibung

Die Erfindung betrifft einen Bremssattel einer Scheibenbremse entsprechend dem Oberbegriff des Anspruchs 1.

Der Bremssattel als Bestandteil einer Scheibenbremse dient im wesentlichen dazu Funktionsteile aufzunehmen, die zum Betrieb der Scheibenbremse erforderlich sind. Hierzu zählen beispielsweise eine Zuspanneinrichtung, die in einer Aufnahmekammer des Bremssattels angeordnet ist, sowie Bremsbeläge, die beidseitig einer Bremsscheibe positioniert sind und die beim Bremsen gegen die Bremsscheibe gepresst werden.

Die beiden, die Funktionsteile aufnehmenden Hälften des Bremssattels sind durch Zugstreben miteinander verbunden, die überdies beim Bremsen auftretende Belastungen aufnehmen.

Prinzipiell gehen Forderungen dahin, gewichtsoptimierte Fahrzeugkomponenten einzusetzen, um so eine Verbesserung der Wirtschaftlichkeit des Fahrzeuges zu erreichen. Insbesondere durch steigende Kraftstoffpreise sowie ein verstärktes Umweltbewusstsein, ist der Wunsch nach einer höheren Effizienz beim Transport von Gütern besonders ausgeprägt.

Zur Effizienzsteigerung trägt maßgeblich die Reduzierung des Eigengewichts des Fahrzeuges bei, da mit geringerem Eigengewicht mehr Nutzlast befördert werden kann, wodurch die Betriebskosten insgesamt gesenkt und die Umweltbelastung durch geringeren Kraftstoffverbrauch reduziert werden.

Aufgrund der im Fahrbetrieb auftretenden hohen Belastungen der Scheibenbremse, kommt der üblicherweise als Gussteil ausgebildete Bremssattel in einer sehr massiven und robusten Bauart zum Einsatz. Dies betrifft insbesondere die Zugstreben, mit denen die beiden, Funktionsteile aufnehmenden Hälften des Bremssattels miteinander verbunden sind. Der bekannte Bremssattel kommt daher den gestellten Forderungen hinsichtlich einer Gewichtsoptimierung nicht entgegen.

Der Erfindung liegt daher die Aufgabe zugrunde, einen Bremssattel der gattungsgemäßen Art so weiterzuentwickeln, dass sein Gewicht bei unveränderter Belastungsfähigkeit reduziert wird.

Diese Aufgabe wird durch einen Bremssattel mit den Merkmalen des Anspruchs 1 gelöst.

Durch diese konstruktive Ausbildung wird eine Gewichtsoptimierung des Bremssattels erreicht, ohne dessen Belastungsfähigkeit zu beeinträchtigen.

Da die Zugstreben bei jeder Beanspruchung nur in bestimmten Bereichen belastet werden, d.h., Spannungen innerhalb der Zugstreben sind nicht gleichmäßig verteilt, reicht es aus, den Bremssattel bzw. die Zugstreben so auszubilden, dass die lastaufnehmenden Bereiche im erforderlichen Umfang entsprechend geformt und dimensioniert sind.

Tatsächlich sind, wie Untersuchungen gezeigt haben, innerhalb der Zugstreben Zonen vorhanden, die im Belastungsfall nur in geringem Maße oder gar keine Kräfte bzw. Spannungen aufnehmen oder übertragen.

Diese Bereiche können, wie nach einer vorteilhaften Weiterbildung der Erfindung vorgesehen, durch Aussparungen oder Durchbrechungen gewichtsreduziert werden, ohne die Funktionsfähigkeit des Bremssattels in irgendeiner Art und Weise einzuschränken.

Wie sich weiter gezeigt hat, sind die dazu geeigneten Bereiche vorzugsweise im mittleren, sich in Längsachsrichtung der Zugstreben erstreckenden Segment vorzusehen, wobei die Durchbrechungen langlochförmig ausgebildet sind.

Neben der durchaus als signifikant zu bezeichnenden Gewichtsersparnis zeichnet sich der neue Bremssattel auch dadurch aus, dass durch die Durchbrüche in den Zugstreben die Kühlung der Bremsscheibe deutlich verbessert wird. Dies vor allem deshalb, weil die Zugstreben nunmehr keinen sozusagen geschlossenen Wärmeschild bilden, unter dem sich die beim Bremsen entstehende Wärme stauen kann.

Naturgemäß trägt dies sowohl zu einer Verbesserung der Standzeit bei, da die funktionsrelevanten Teile, wie Bremsbeläge, Bremsscheibe oder dergleichen nicht mehr in dem bisherigen Umfang belastet werden, und zum anderen aus den gleichen Gründen zur Verbesserung der Betriebssicherheit.

Wie erwähnt, ist der Bremssattel üblicherweise als Gussteil ausgebildet, so dass der im Sinne der Erfindung gestaltete Bremssattel gegenüber dem bekannten zumindest kostenneutral herzustellen ist. Durch die Materialeinsparung ergibt sich im Gegenteil eine Verringerung der Herstellungskosten, wobei die Ausnehmungen bzw. Durchbrüche mit eingegossen werden können, ohne eine mechanische Bearbeitung jedweder Form.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

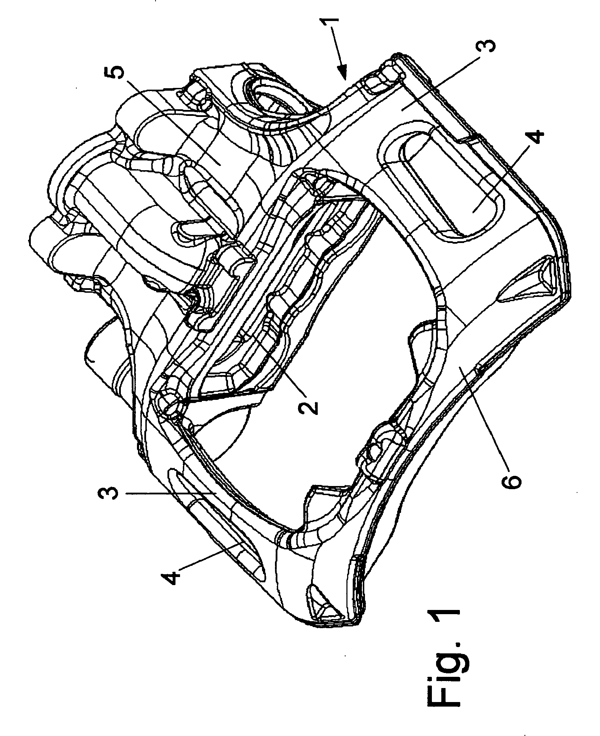

- Figur 1: einen erfindungsgemäßen Bremssattel in einer perspektivischen Ansicht

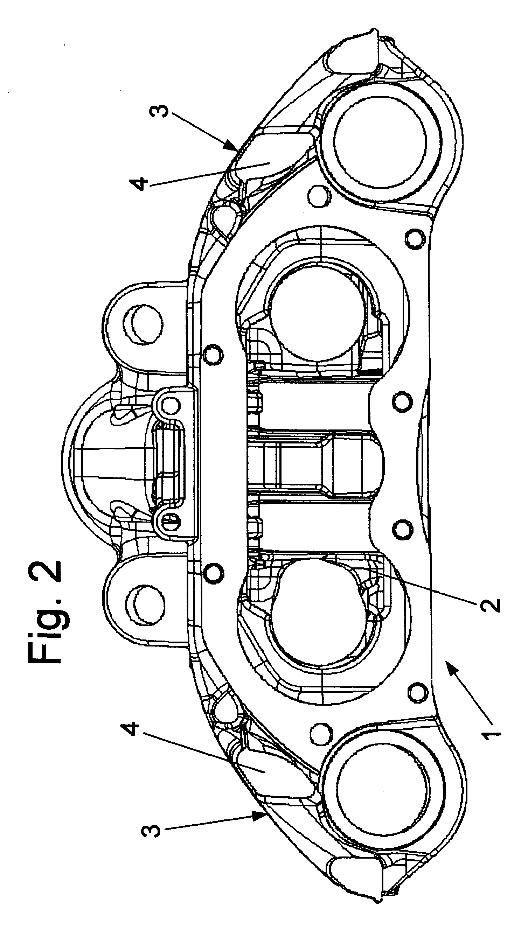

- Figur 2: den Bremssattel in einer Rückansicht.

In den Figuren ist ein Bremssattel einer Scheibenbremse, insbesondere für Nutzfahrzeuge dargestellt, der insgesamt mit dem Bezugszeichen 1 versehen ist.

Dieser Bremssattel weist zwei mit Abstand zueinander verlaufende, eine nicht dargestellte Bremsscheibe quer zu deren Drehrichtung überbrückende Zugstreben 3 auf, die zwei Hälften 5, 6 des Bremssattels starr miteinander verbinden, von denen jede Funktionsteile der Scheibenbremse aufnehmen.

So ist die Hälfte 5 mit einer Aufnahmekammer 2 versehen, in der eine nicht gezeigte Zuspanneinrichtung zum Zuspannen der Scheibenbremse untergebracht werden kann, während die Hälfte 6 der Anlage eines reaktionsseitigen Bremsbelages dient bzw. der Befestigung von Haltemitteln, mit denen die Bremsbeläge arretierbar sind.

Entsprechend der Erfindung sind die Zugstreben 3 hinsichtlich ihrer Gestaltung und Dimensionierung belastungsoptimiert.

Hierzu sind die Zugstreben 3 im Ausführungsbeispiel mit Durchbrechungen 4 versehen, die sich in Längsrichtung der Zugstreben 3 erstrecken und etwa langlochförmig ausgebildet sind.

Die Gestaltung und Abmessung der Durchbrechungen 4 sind abhängig von den im Betriebsfall der Scheibenbremse auf die Zugstreben 3 einwirkenden Kräfte bzw.

Spannungen, wobei die Durchbrechungen 4 in den Bereichen angeordnet sind, die spannungsfrei bzw. nur mit sehr geringen Spannungen beaufschlagt sind.

Anstelle der Durchbrechungen 4 können auch Ausnehmungen vorgenehmen sein, die nicht durchgängig sind, wie die Durchbrechungen 4, sondern muldenförmige Vertiefungen darstellen.

### Bezugszeichenliste

- 1: Bremssattel
- 2: Aufnahmekammer
- 3: Zugstrebe
- 4: Durchbrechung
- 5: Hälfte
- 6: Hälfte

## Patentansprüche

1. Bremssattel einer Scheibenbremse, insbesondere für Nutzfahrzeuge, mit zwei, im wesentlichen parallel und mit Abstand zueinander verlaufenden, eine Bremsscheibe quer zu deren Drehrichtung überbrückenden Zugstreben (3), die beidseitig der Bremsscheibe angeordnete Aufnahmen für Funktionsteile starr miteinander verbinden, **dadurch gekennzeichnet, dass** die Zugstreben (3) hinsichtlich ihrer Gestaltung und Dimensionierung belastungsoptimiert sind.

2. Bremssattel nach Anspruch 1, **dadurch gekennzeichnet, dass** die Zugstreben (3) mit Durchbrechungen (4) versehen sind.

3. Bremssattel nach Anspruch 1 oder 2, **dadurch gekennzeichnet, dass** die Durchbrechungen (4) sich in Längsrichtung der Zugstreben (3), etwa im Mittenbereich angeordnet erstrecken.

4. Bremssattel nach einem der vorhergehenden Ansprüche, **dadurch gekennzeichnet, dass** die Durchbrechungen (4) langlochförmig ausgebildet sind.

5. Bremssattel nach einem der vorhergehenden Ansprüche, **dadurch gekennzeichnet, dass** die Zugstreben (3) mit Ausnehmungen versehen sind.

6. Bremssattel nach einem der vorhergehenden Ansprüche, **dadurch gekennzeichnet, dass** die Ausnehmungen muldenförmig ausgebildet sind.

7. Bremssattel nach einem der vorhergehenden Ansprüche, **dadurch gekennzeichnet, dass** die Durchbrechungen (4) bzw. die Ausnehmungen beim Gießen des Bremssattels (1) eingebracht sind.

8. Bremssattel nach einem der vorhergehenden Ansprüche, **dadurch gekennzeichnet, dass** die Durchbrechungen (4) bzw. Ausnehmungen in den niedrig oder nicht belasteten Bereichen der Zugstreben (3) angeordnet sind.
